# EUROPÄISCHE PATENTSCHRIFT

(11) **EP 2 542 612 B1**
(45) Veröffentlichungstag und Bekanntmachung des Hinweises auf die Patenterteilung: **30.04.2014**
(21) Anmeldenummer: 11704618.5
(22) Anmeldetag: 22.02.2011
(51) Int. Cl.: C08G 65/00

(54) **VERFAHREN ZUR HERSTELLUNG VON POLYETHERALKOHOLEN**
PROCESS FOR PREPARING POLYETHER ALCOHOLS
PROCÉDÉ DE FABRICATION DE POLYÉTHER-ALCOOLS

(30) Priorität: 02.03.2010 EP 10155207
(43) Veröffentlichungstag der Anmeldung: 09.01.2013
(73) Patentinhaber: BASF SE, 67056 Ludwigshafen (DE)
(72) Erfinder: ZARBAKHSH, Sirus, Hong Kong CENTRAL Hong Kong (CN); SCHÜTTE, Markus, 49080 Osnabrück (DE); SEIFERT, Holger, 49163 Bohmte (DE); CHILEKAR, Vinit, 68161 Mannheim (DE); ELING, Berend, 49448 Lemförde (DE); RUDLOFF, Jan, Ann Arbor MI USA 48104 (US)
(86) Internationale Anmeldenummer: PCT/EP2011/052556
(87) Internationale Veröffentlichungsnummer: WO 2011/107367

(56) Entgegenhaltungen:
- EP-A1- 0 458 095
- WO-A1-99/47581
- WO-A1-2005/123806
- DE-A1-102007 052 599

## Beschreibung

Gegenstand der Erfindung ist ein Verfahren zur Herstellung von Polyetheralkoholen durch Anlagerung von Alkylenoxiden an Verbindungen mit mit Alkylenoxiden reaktiven Wasserstoffatomen.

Die Herstellung von Polyetheralkholen durch Anlagerung von Alkylenoxiden an Verbindungen mit reaktiven Wasserstoffatomen, in Folgenden auch als Starterverbindungen bezeichnet, ist seit langem bekannt. Die Anlagerung wird zumeist unter Verwendung von Katalysatoren durchgeführt.

Die zur Herstellung von Polyurethan-Hartschaumstoffen eingesetzten Polyetheralkohole haben zumeist eine Funktionalität von 2 bis 8 und eine Hydroxylzahl im Bereich zwischen 250 und 800 mgKOH/g. Als Verbindungen mit mindestens zwei mit Alkylenoxiden reaktiven Wasserstoffatomen werden zumeist Alkohole und/oder Amine mit 2 oder mehr reaktiven Wasserstoffatomen eingesetzt. Dies können mehrfunktionelle Alkohole, wie Glyzerin, Diethylenglycol, Trimethylolpropan, Sorbitol oder Saccharose, oder Amine, wie Ethylendiamin (EDA), Toluoldiamin (TDA) oder Diphenylmethandiamin (MDA) oder polymeres MDA (p-MDA) sein. Insbesondere bei den festen Startern sind am Anfang des Prozesses nur langsame Dosierraten möglich, da sich das Alkylenoxid nur schlecht in der Reaktionsmischung löst. Dadurch kommt es zu einer Akkumulation von Alkylenoxid die sich in einem hohen Reaktorinnendruck äußert. Die hohe Akkumulation von Alkylenoxid stellt einen unsicherer Zustand dar, da im Falle einer Durchgehreaktion der Auslegungsdruck des Reaktors überschritten würde. Weiterhin sorgt die hohe Viskosität für eine schlechte Wärmeabfuhr. Das führt zu langen Zykluszeiten. Zudem kann die schlechte Wärmeabfuhr zu lokalen Überhitzungen, sogenannten Hotspots führen, welche die Produktqualität verschlechtern. Die hohe Viskosität beschleunigt die Abnutzung der Pumpen und des externen Wärmetauschers.

In WO 99/47581 wird ein Verfahren zur Herstellung von Polyetheralkoholen auf Basis von Zuckern und Coinitiatoren beschrieben, bei dem als Katalysatoren Imidazole eingesetzt werden. Hierbei kann die Startermischung auch einen Polyetheralkohol enthalten. Bei der Umsetzung werden die Alkylenoxide mit einer langsamen Dosierrate zudosiert, was zu einer geringen Raum-Zeit-Ausbeute führt.

Es bestand somit die Aufgabe, ein Verfahren zu entwickeln, das die Herstellung von Polyetheralkoholen mit einer verbesserten Raum/Zeit Ausbeute erlaubt, wobei die Nachteile des Standes der Technik vermieden werden sollten. Das Herstellungsverfahren sollte einfach sein, und es sollte auch möglich sein, Amine als Katalysatoren einzusetzen.

Die Aufgabe konnte überraschenderweise dadurch gelöst werden, dass die Startermischung mindestens eine Verbindung mit mindestens drei mit Alkylenoxiden reaktiven Wasserstoffatomen mit einem Molekulargewicht Mn von maximal 600 g/mol, vorzugsweise maximal 400 g/mol, und mindestens einen Polyetheralkohol mit einer Hydroxylzahl von 100-800 mg KOH/g und einer Funktionalität von 1,5 bis 8 enthält und dass der Rührenergieeintrag im Bereich von 0,15 kW/m³ bis 5 kW/m³ lag. Als Startermischung gilt hierbei das Gemisch aus den Starterverbindungen und Katalysator.

Gegenstand der Erfindung ist demzufolge ein Verfahren gemäß Anspruch 1 zu Herstellung von Polyetheralkoholen d1) durch Umsetzung von a) Verbindungen mit mindestes drei mit Alkylenoxiden reaktiven Wasserstoffatomen mit einem Molekulargewicht Mn von maximal 600 g/mol, vorzugsweise maximal 400 g/mol, mit b) Alkylenoxiden unter Verwendung von c) Katalysatoren, dadurch gekennzeichnet, dass die Umsetzung in Gegenwart eines Polyetheralkohols d) mit einer Hydroxylzahl von 100-800 mg KOH/g und einer Funktionalität von 1,5 bis 8 durchgeführt wird.

Hierin beschrieben sind auch die nach dem erfindungsgemäßen Verfahren hergestellten Polyetheralkohole sowie deren Verwendung zur Herstellung von Polyurethanen.

Der Polyetheralkohol d) wird in einer Menge von 1-70 Gew.-%, bevorzugt 10-40 Gew.-% und insbesondere in einer Menge von 15-30 Gew.-%, jeweils bezogen auf die Summe der Verbindungen a) und d) eingesetzt.

In einer besonders bevorzugten Ausführungsform des erfindungsgemäßen Verfahrens wird zur Herstellung des Polyetheralkohols d) das gleiche Alkylenoxid b) und die gleiche Verbindung bzw. die gleichen Verbindungen mit mindestes drei mit Alkylenoxiden reaktiven Wasserstoffatomen a) jeweils in der gleichen Menge eingesetzt wie bei der Herstellung des Polyetheralkohols d1). Das heißt, dass in diesem Fall die Polyetheralkohole d) und d1) gleich sind.

Als Komponente a) können vorzugsweise Alkohole mit mindestens zwei, vorzugsweise mindestens drei Hydroxylgruppen oder Amine mit mindestens einer Aminogruppe eingesetzt werden. Vorzugsweise werden Trimethylopropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin sowie Mischungen aus mindestens zwei der aufgeführten Alkohole eingesetzt.

In einer bevorzugten Ausführungsform der Erfindung enthält die Komponente a) mindestens eine bei Raumtemperatur feste, Hydroxylgruppen enthaltende Verbindung. Dabei kann es sich in einer Ausführungsform um Mannich-Kondensate handeln. In einer weiteren Ausführungsform handelt es sich um Zuckeralkohole. Diese sind vorzugsweise ausgewählt aus der Gruppen, enthaltend Glucose, Sorbit, Mannit und Saccharose, besonders bevorzugt Sorbit und Saccharose. In einer weiteren Ausführungsform handelt es sich um Saccharose.

In einer weiteren bevorzugten Ausführungsform der Erfindung enthält die Komponente a) eine Mischung aus mindestens einem bei Raumtemperatur festen und einem bei Raumtemperatur flüssigen Alkohol. Bei den bei Raumtemperatur festen Alkoholen handelt es sich vorzugsweise um die oben näher charakterisierten Zuckeralkohole, insbesondere um Saccharose. Bei den bei Raumtemperatur flüssigen Alkoholen handelt es sich vorzugsweise um Ethylenglykol und dessen höhere Homologe, Propylenglykol und dessen höhere Homologe und Glyzerin, insbesondere um Glyzerin. Die Komponente a) kann auch Wasser enthalten. Wenn Wasser mitverwendet wird, liegt die Menge insbesondere bei maximal 10 Gew.-%, bezogen auf das Gewicht der Komponente a).

In einer weiteren bevorzugten Ausführungsform der Erfindung werden als Komponente a) Amine eingesetzt. Dabei kann es sich um aliphatische Amine handeln. Bevorzugt werden aromatische Amine eingesetzt. Besonders bevorzugt werden Amine mit mindestens einer, vorzugsweise mit mindestens zwei Aminogruppen eingesetzt. Insbesondere sind die aromatischen Amine ausgewählt aus der Gruppe, enthaltend Toluoldiamin (TDA) oder Diphenylmethandiamin (MDA) oder polymeres MDA (p-MDA). Bei TDA werden insbesondere die 2,3- und 3,4-Isomere, auch als vicinales TDA bezeichnet, eingesetzt.

Als Alkylenoxid b) werden vorzugsweise Propylenoxid, Ethylenoxid, Butylenoxid, Isobutylenoxid, Styroloxid oder Mischungen aus mindestens zwei der genannten Alkylenoxide eingesetzt. Vorzugsweise wird als Alkylenoxid b) Propylenoxid, Ethylenoxid oder Mischungen aus Propylenoxid und Ethylenoxid eingesetzt. Besonders bevorzugt wird als Alkylenoxid b) Propylenoxid eingesetzt.

Als Katalysatoren werden zumeist basische Verbindungen eingesetzt. Dabei handelt es sich bei den technischen Verfahren meist um die Hydroxide von Alkalimetallen, insbesondere um Kaliumhydroxid. Da diese Katalysatoren die Weiterverarbeitung der Polyetheralkohole stören, müssen sie aus dem Polyetheralkohol entfernt werden, zumeist durch Neutralisation mit einer Säure und nachträglicher Entfernung der dabei gebildeten Salze. Dieser zusätzliche Verfahrenschritt führt zu einer Verschlechterung der Raum-Zeit-Ausbeute und zu Produktverlusten.

Um diesen Nachteil zu beheben, können Katalysatoren eingesetzt werden, die im Produkt verbleiben können. So ist es bekannt, Amine als Katalysatoren einzusetzen. Da die Amine katalytisch weniger aktiv sind als die alkalischen Katalysatoren, werden sie vorzugsweise zur Herstellung von Polyetheralkoholen mit kurzen Polyetherketten eingesetzt, wie sie vorzugsweise bei der Herstellung von Polyurethan-Hartschaumstoffen verwendet werden. Derartige Polyole werden beispielsweise in RO 108246 und RO85851 oder in EP0318784 beschrieben.

Es kann auch eine Kombination von Alkalimetallhydroxid- und Aminkatalyatoren eingesetzt werden. Dies bietet sich insbesondere an, um Polyole mit geringer Hydroxylzahl herzustellen. Die erhaltenen Produkte können analog zu den mit Alkalimetallhydroxid katalysierten Polyolen aufgearbeitet werden. Alternativ kann zur Aufarbeitung auch nur der Neutralisationsschritt mit Säure durchgeführt werden. In diesem Fall werden bevorzugt Carbonsäuren wie z.B. Milchsäure, Essigsäure oder 2-Ethylhexansäure eingesetzt.

Als Katalysator c) wird daher vorzugsweise ein Amin eingesetzt. Dabei kann es sich um primäre, sekundäre oder tertiäre Amine handeln. Weiterhin können aliphatische oder aromatische Amine eingesetzt werden. Bei den aliphatischen Aminen sind tertiäre Amine besonders bevorzugt. Als Amine gelten auch Aminoalkohole. In einer Ausführungsform des erfindungsgemäßen Verfahrens kann es sich bei den Aminen um aromatische heterocylische Verbindungen mit mindestens einem, vorzugsweise mindestens zwei Stickstoffatomen im Ring, handeln.

Vorzugsweise sind die Amine ausgewählt aus der Gruppe, enthaltend Trialkylamine, insbesondere Trimethylamin, Triethylamin, Tripropylamin , Tributylamin), Dimethylalkylamine, insbesondere Dimethylethanolamin, Dimethylcyclohexylamin, Dimethylethylamin, Dimethylbutylamin,) aromatische Amine, insbesondere Dimethylanilin, Dimethylaminopyridin, Dimethylbenzylamin, Pyridin, Imidazole (insbesondere Imidazol, N-Methylimidazol, 2-Methylimidazol, 4-Methylimidazol, 5-Methylimidazol, 2-ethyl-4-methylimidazol, 2,4 Dimethylimidazol, 1-Hydroxypropylimidazol, 2,4,5 Trimethylimidazol, 2-ethylimidazol, 2-ethyl-4-methylimidazol, N-phenylimidazol, 2-phenylimidazol, 4-phenylimidazol), Guanidin, alkylierte Guanidine (insbesondere 1,1,3,3 tetramethylguanidin), 7-Methyl-1,5,7-triazabicyclo[4.4.0]dec-5-en, Amidine (insbesondere 1,5-Diazobicylco[4.3.0]-non-5-en, 1,5-Diazabicylo[5.4.0]undec-7-en).

Die aminischen Katalysatoren können allein oder in beliebigen Mischungen zueinander eingesetzt werden

In einer bevorzugten Ausführungsform der Erfindung ist der Katalysator c) Dimethylethanolamin.

In einer bevorzugten Ausführungsform der Erfindung ist der Katalysator c) ein Imidazol.

Das Amin wird dabei vorzugsweise in einer Menge von 0,1-1,0 Massen % bezogen auf dem Gesamtansatz eingesetzt. Diese Menge ist besonders bevorzugt bei der Verwendung von aliphatischen Aminen.

Die heterocyclischen Verbindungen, insbesondere die Imidazole, werden vorzugsweise in einer Menge von 0,01 bis 0,5 Massen % bezogen auf dem Gesamtansatz eingesetzt.

In einer weiteren Ausführungsform der Erfindung werden, wie beschrieben, als Katalysator c) Oxide, Hydroxide oder Alkoholate eines Alkali- oder Erdalkalimetalls eingesetzt. Besonders bevorzugt ist der Katalysator ausgewählt aus der Gruppe, enthaltend Kaliumhydroxid, Cäsiumhydroxid oder Kalium-tert-butanolat.

Zur Durchführung des erfindungsgemäßen Verfahrens werden die Bestandteile der Startermischung vermischt. Danach wird vorzugsweise zunächst die Gasphase im Reaktor durch Inertgas, insbesondere Stickstoff, ersetzt. Danach wird das Alkylenoxid dosiert.

Die Anlagerung der Alkylenoxide wird bevorzugt bei einer Temperatur zwischen 90 und 150 °C und einem Druck zwischen 0,1 bis 6 bar durchgeführt. An die Dosierung der Alkylenoxide schließt sich üblicherweise eine Nachreaktionsphase zur vollständigen Umsetzung der Alkylenoxide an.

Vorzugsweise werden die ersten 40 Gew.-% besonders bevorzugt die ersten 30 Gew.-% und insbesondere 25 Gew.-% der benötigten Menge an Alkylenoxid mit einer mittleren Dosierrate von 45 kg/h/m³ bis 160 kg/h/m³, besonders bevorzugt 50 kg/h/m³ bis 140 kg/h/m³, insbesondere 75 kg/h/m³ bis 120 kg/h/m³. Die Volumenangabe bezieht sich dabei auf das Reaktorvolumen. Ist ein externer Kühlkreislauf vorhanden wird dieser für das Reaktorvolumen mit berücksichtigt.

Die mittlere Dosierrate bezogen auf das Reaktorvolumen wird berechnet indem die zugegebene Alkylenoxidmenge durch die für diese Menge Alkylenoxid benötigte Dosierzeit und durch das Reaktorvolumen dividiert wird.

Zur Durchführung des erfindungsgemäßen Verfahrens ist ein Rührenergieeintrag von 0,15 kW/m³ bis 4,5 kW/m³ vorteilhaft, bevorzugt 0,25 kW/m³ bis 2,8 kW/m³ und besonders bevorzugt 0,3 kW/m³ bis 2,0 kW/m³.

Nach Abschluss der Dosierung der Alkylenoxide schließt sich üblicherweise eine Nachreaktionsphase an, in der das Alkylenoxid abreagiert. Es folgt üblicherweise eine Aufarbeitung des Reaktionsprodukts, beispielsweise durch eine Destillation zur Abtrennung leicht flüchtiger Bestandteile, die vorzugsweise unter Vakuum durchgeführt wird. Weiterhin kann während, vor oder nach der Destillation auch mit Inertgas oder Dampf gestrippt werden. Die Strippung findet in einem Temperaturbereich von 60-150°C und einem Druckbereich von 15-1013 mbar statt. Das Inertgas oder der Dampf wird mit 1-1900 kg/h/m³ eingeleitet. Die Volumenangabe bezieht sich auf das Reaktorvolumen.

Bei der Verwendung von Oxiden, Hydroxiden oder Alkoholaten eines Alkali- oder Erdalkalimetalls wird das Reaktionsgemisch nach der Anlagerung der Alkylenoxide durch Destillation entwässert sowie durch Säureneutralisation und Abtrennung der entstandenen Salze aufgearbeitet.

Wie bereits ausgeführt, können die Polyetheralkohole mit Polyisocyanaten zu Polyurethan-Hartschaumstoffen umgesetzt werden.

Zu den dafür eingesetzten Ausgangsstoffen ist im Einzelnen folgendes zu sagen:

Als organische Polyisocyanate kommen vorzugsweise aromatische mehrwertige Isocyanate in Betracht.

Im einzelnen seien beispielhaft genannt: 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Mischungen aus 4,4'- und 2,4'-Diphenylmethan-diisocyanaten und bei der herstellung von Polyurethan-Hartschaumstoffen insbesondere Mischungen aus 4,4'-, 2,4'- und 2,2'-Diphenylmethan-diisocyanaten und Polyphenyl-polymethylen-polyisocyanaten (Roh-MDI).

Die Polyetheralkohole werden üblicherweise im Gemisch mit anderen Verbindungen mit mindestens zwei mit Isocyanatgruppen reaktiven Wasserstoffatomen eingesetzt.

Als Verbindungen mit mindestens zwei gegenüber Isocyanat reaktiven Wasserstoffatomen, die gemeinsam mit den eingesetzten Polyetheralkoholen di) verwendet werden können, kommen insbesondere Polyetheralkohole und/oder Polyesteralkohole mit OH-Zahlen im Bereich von 100 bis 1200 mgKOH/g zum Einsatz.

Die gemeinsam mit den eingesetzten Polyetheralkoholen verwendeten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die gemeinsam mit den eingesetzten Polyetheralkoholen di) verwendeten Polyetheralkohole haben zumeist eine Funktionalität zwischen 2 und 8, insbesondere 3 bis 8.

Insbesondere kommen Polyetheralkohole, die nach bekannten Verfahren, beispielsweise durch anionische Polymerisation von Alkylenoxiden in Gegenwart von Katalysatoren hergestellt werden, zum Einsatz.

Zu den Verbindungen mit mindestens zwei gegenüber Isocyanat reaktiven Wasserstoffatomen gehören auch die gegebenenfalls mitverwendeten Kettenverlängerer und Vernetzer. Die Polyurethan-Hartschaumstoffe können ohne oder unter Mitverwendung von Kettenverlängerungs- und/oder Vernetzungsmitteln hergestellt werden. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente, eingesetzt.

Die Herstellung der Polyurethan-Schaumstoffe erfolgt üblicherweise in Anwesenheit von Treibmitteln. Als Treibmittel kann vorzugsweise Wasser verwendet werden, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die physikalischen Treibmittel werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Die Herstellung der Polyurethane kann, falls erforderlich, in Anwesenheit von Katalysatoren, Flammschutzmitteln sowie üblichen Hilfs- und/oder Zusatzstoffen Hilfs- und/oder Zusatzstoffen durchgeführt werden.

Weitere Angaben zu eingesetzten Ausgangsverbindungen finden sich beispielsweise im Kunststoffhandbuch, Band 7 "Polyurethane", herausgegeben von Günter Oertel, Carl-Hanser-Verlag München, 3. Auflage, 1993.

Die Erfindung soll an den nachfolgenden Beispielen näher beschrieben werden.

### Beispiel 1 - Polyetherol 1 (Vergleichsbeispiel)

In einen 300 ml Druckreaktor wurde 21,15 g Glycerin, 58,68 g Saccharose und 1,76 g Dimethylethanolamin gegeben. Der Rührer wurde in Betrieb genommen (0,1 kW/m³) und der Reaktor wurde mehrmals inertisiert und auf 105°C erwärmt. Anschließend wurde die Propylenoxid Dosierung mit einer Dosierrate von 0,8 ml/Minute gestartet. Bevor die Menge des dosierten Propylenoxids 35 g erreichte, überschritt der Reaktordruck 6,4 bar und der Versuch musste aus Sicherheitsgründen abgebrochen werden. Das gewünschte Produkt konnte nicht isoliert werden. Das Zielprodukt war ein Polyetheralkohol mit einer Hydroxylzahl von 500 mgKOH/g.

### Beispiel 2- Polyetherol 2 (Vergleichsbeispiel)

In den in Bsp. 1 beschriebenen Reaktor wurde 18,02 g Glycerin, 31,2 g eines Polyols mit Hydroxyzahl 500 mgKOH/g und einer Funktionalität von 4,95, 50,2 g Saccharose und 1,52 g Dimethylethanolamin gegeben. Der Rührer wurde in Betrieb genommen (0,1 kW/m³) und der Reaktor wurde mehrmals inertisiert und auf 105°C erwärmt. Anschließend wurde die Propylenoxid Dosierung gestartet mit einer Dosierrate von 0,8 ml/Minute gestartet. Bevor die Menge des dosierten Propylenoxids 35 g erreichte, überschritt der Reaktordruck 6,4 bar und der Versuch musste aus Sicherheitsgründen abgebrochen werden. Das gewünschte Produkt konnte nicht isoliert werden. Das Zielprodukt war ein Polyetheralkohol mit einer Hydroxylzahl von 500 mgKOH/g.

### Beispiel 3- Polyetherol 3

In den in Bsp. 1 beschriebenen Reaktor wurde 18,13 g Glycerin, 31,1 g eines Polyols mit Hydroxyzahl 500 mgKOH/g und einer Funktionalität von 5,95, 50,2 g Saccharose und 1,50 g Dimethylethanolamin gegeben. Der Rührer wurde in Betrieb genommen (0,5 kW/m³) und der Reaktor wurde mehrmals inertisiert und auf 105°C erwärmt. Anschließend wurde die Propylenoxid Dosierung mit einer Dosierrate von 0,8 ml/Minute gestartet. Während der Zugabe der ersten 35 g Propylenoxid (Dosierzeit: 53 Minuten) betrug das Druckmaximum 5 bar. Insgesamt wurden 126,5 g Propylenoxid zudosiert (Gesamtdosierzeit: 190 Minuten). Die mittlere Dosierrate bezogen auf das Reaktorvolumen betrug 133 kg/h/m³. Die Nachreaktion von 3 Stunden lief bei 112°C ab. Das noch vorhandene Propylenoxid wurde im Stickstoffstrom abgestrippt. Das Produkt (220g) wies folgende Parameter auf

| | |
|---|---|
| Hydroxylzahl | 507 mg KOH/g |
| Viskosität bei 25°C | 17123 mPas |
| Wassergehalt | 0,009% |
| pH | 10,3 |

Die Viskosität der Polyole wurde, wenn nicht anders angegeben, bei 25 °C mit einem Rotationsviskosimeter Rheotec RC 20 unter Verwendung der Spindel CC 25 DIN (Spindel-Durchmesser: 12,5 mm; Messzylinder-Innendurchmesser: 13,56 mm) bei einer Scherrate von 50 1/s bestimmt.

## Patentansprüche

1. Verfahren zu Herstellung von Polyetheralkoholen d1) durch Umsetzung von a) mindestens einer Verbindung mit mindestes drei mit Alkylenoxiden reaktiven Wasserstoffatomen mit einem Molekulargewicht Mn von maximal 600 g/mol mit b) Alkylenoxiden unter Verwendung von c) Katalysatoren, **dadurch gekennzeichnet, dass** die Umsetzung in Gegenwart eines Polyetheralkohols d) mit einer Hydroxylzahl von 100-800 mg KOH/g und einer Funktionalität von 1,5 bis 8 durchgeführt wird, wobei der Polyetheralkohol d) in einer Menge von 1-70 Gew.-% bezogen auf die Summe der Verbindungen a) und d) eingesetzt wird, und wobei der Rührenergieeintrag im Bereich von 0,15 kW/m³ bis 5 kW/m³ liegt.

2. Verfahren nach Anspruch 1, **dadurch gekennzeichnet, dass** das Alkylenoxid mit einer mittleren Dosierrate bezogen auf das Reaktorvolumen von 45 kg/h/m³ bis 160 kg/h/m³ dosiert wird.

3. Verfahren nach Anspruch 1, **dadurch gekennzeichnet, dass** zur Herstellung des Polyetheralkohols d1) das gleiche Alkylenoxid b) und die gleiche Verbindung mit mindestes drei mit Alkylenoxiden reaktiven Wasserstoffatomen a) jeweils in der gleichen Menge eingesetzt wurden wie bei der Herstellung des Polyetheralkohols d).

4. Verfahren nach Anspruch 1, **dadurch gekennzeichnet, dass** als Alkylenoxid b) Propylenoxid, Ethylenoxid, Butylenoxid, Isobutylenoxid, Styroloxid und Mischungen aus mindestens zwei der genannten Alkylenoxide eingesetzt werden.

5. Verfahren nach Anspruch 1, **dadurch gekennzeichnet, dass** als Komponente a) Alkohole mit mindestens drei Hydroxylgruppen eingesetzt werden.

6. Verfahren nach Anspruch 1, **dadurch gekennzeichnet, dass** die Komponente a) mindestens einen Zuckeralkohol enthält.

7. Verfahren nach Anspruch 1. **dadurch gekennzeichnet, dass** die Komponente a) eine Mischung aus mindestens einem bei Raumtemperatur festen und einem bei Raumtemperatur flüssigen Alkohol ist.

8. Verfahren nach Anspruch 1, **dadurch gekennzeichnet, dass** als Komponente a) Amine mit mindestens zwei Aminogruppen eingesetzt werden.

9. Verfahren nach Anspruch 1, **dadurch gekennzeichnet, dass** als Katalysator c) ein Amin eingesetzt wird.

10. Verfahren nach Anspruch 1, **dadurch gekennzeichnet, dass** der Katalysator c) ein Amin ausgewählt ist aus der Gruppe, enthaltend Trialkylamine, insbesondere Trimethylamin, Triethylamin, Tripropylamin, Tributylamin, Dimethylalkylamine, insbesondere Dimethylethanolamin, Dimethylcyclohexylamin, Dimethylethylamin, Dimethylbutylamin, aromatische Aamine, insbesondere Dimethylanilin, Dimethylaminopyridin, Dimethylbenzylamin, Pyridin, Imidazole (insbesondere Imidazol, N-Methylimidazol, 2-Methylimidazol, 4-Methylimidazol, 5-Methylimidazol, 2-ethyl-4-methylimidazol, 2,4 Dimethylimidazol, 1-Hydroxypropylimidazol, 2,4,5 Trimethylimidazol, 2-ethylimidazol, 2-ethyl-4-methylimidazol, N-phenylimidazol, 2-phanylimidazol, 4-phenylimidazol), Guanidin, alkylierte Guanidine (insbesondere 1,1,3,3 tetramethylguanidin), 7-Methyl-1,5,7-triazabicyclo[4.4.0]dec-5-en, Amidine (insbesondere 1,5-Diazobicylco[4.3.0]-non-5-en, 1,5-Diazabicylo[5.4.0]undec-7-en).

11. Verfahren nach Anspruch 1, **dadurch gekennzeichnet, dass** der Katalysator c) Dimethylethanolamin oder Imidazol ist.

12. Verfahren nach Anspruch 1, **dadurch gekennzeichnet, dass** der Katalysator c) das Oxid, Hydroxid oder Alkoholat eines Alkali- oder Erdalkalimetalls ist.

## Claims

1. A process for preparing a polyether alcohol d1) by reaction of a) at least one compound having at least three hydrogen atoms reactive with alkylene oxides and a molecular weight Mn of not more than 600 g/mol with b) an alkylene oxide by using c) a catalyst, wherein said reaction is carried out in the presence of a polyether alcohol d) having a hydroxyl number of 100-800 mg KOH/g and a functionality of 1.5 to 8, wherein said polyether alcohol d) is used in an amount of 1-70% by weight based on the sum total of said compounds a) and d), and wherein the stirring energy input is in the range from 0.15 kW/m³ to 5 kW/m³.

2. The process according to claim 1 said wherein alkylene oxide is metered at an average metering rate based on the reactor volume of 45 kg/h/m³ to 160 kg/h/m³.

3. The process according to claim 1 wherein said polyether alcohol d1) is prepared using the same alkylene oxide b) and the same compound having at least three hydrogen atoms reactive with alkylene oxides a) both in the same amount as in the preparation of said polyether alcohol d).

4. The process according to claim 1 wherein said alkylene oxide b) comprises propylene oxide, ethylene oxide, butylene oxide, isobutylene oxide, styrene oxide and mixtures of two or more thereof.

5. The process according to claim 1 wherein component a) comprises alcohols having at least three hydroxyl groups.

6. The process according to claim 1 wherein said component a) comprises at least one sugar alcohol.

7. The process according to claim 1 wherein said component a) is a mixture of at least one room temperature solid alcohol and at least one room temperature liquid alcohol.

8. The process according to claim 1 wherein component a) comprises amines having at least two amino groups.

9. The process according to claim 1 wherein catalyst c) comprises an amine.

10. The process according to claim 1 wherein said catalyst c) is an amine selected from the group comprising trialkylamines, more particularly trimethylamine, triethylamine, tripropylamine, tributylamine, dimethylalkylamines, more particularly dimethylethanolamine, dimethylcyclohexylamine, dimethylethylamine, dimethylbutylamine, aromatic amines, more particularly dimethylaniline, dimethylaminopyridine, dimethylbenzylamine, pyridine, imidazoles (more particularly imidazole, N-methylimidazole, 2-methylimidazole, 4-methylimidazole, 5-methylimidazole, 2-ethyl-4-methylimidazole, 2,4-dimethylimidazole, 1-hydroxypropylimidazole, 2,4,5-trimethylimidazole, 2-ethylimidazole, 2-ethyl-4-methylimidazole, N-phenylimidazole, 2-phenylimidazole, 4-phenylimidazole), guanidine, alkylated guanidines (more particularly 1,1,3,3-tetramethylguanidine), 7-methyl-1,5,7-triazabicyclo[4.4.0]dec-5-ene, amidines (more particularly 1,5-diazobicyclo[4.3.0]non-5-ene, 1,5-diazabicyclo[5.4.0]undec-7-ene).

11. The process according to claim 1 wherein said catalyst c) is dimethylethanolamine or imidazole.

12. The process according to claim 1 wherein said catalyst c) is the oxide, hydroxide or alkoxide of an alkali or alkaline earth metal.

## Revendications

1. Procédé pour la préparation de polyétheralcools d1) par mise en réaction de a) au moins un composé comportant au moins trois atomes d'hydrogène réactifs avec des oxydes d'alkylène, ayant une masse moléculaire Mn d'au maximum 600 g/mole, avec b) des oxydes d'alkylène, avec utilisation de c) catalyseurs, **caractérisé en ce qu'**on effectue la réaction en présence d'un polyétheralcool d) ayant un indice de groupes hydroxy de 100-800 mg de KOH/g et une fonctionnalité de 1,5 à 8, en utilisant le polyétheralcool d) en une quantité de 1-70 % en poids par rapport à la somme des composés a) et d), et l'apport d'énergie de l'agitateur se situant dans la plage de 0,15 kW/m³ à 5 kW/m³.

2. Procédé selon la revendication 1, **caractérisé en ce qu'**on ajoute l'oxyde d'alkylène par addition dosée à une vitesse moyenne d'addition de 45 kg/h/m³ à 160 kg/h/m³, par rapport au volume du réacteur.

3. Procédé selon la revendication 1, **caractérisé en ce que** pour la préparation du polyétheralcool d1) on a utilisé le même oxyde d'alkylène b) et le même composé a) comportant au moins trois atomes d'hydrogène réactifs avec des oxydes d'alkylène, chacun en la même quantité, que dans la préparation du polyétheralcool d).

4. Procédé selon la revendication 1, **caractérisé en ce qu'**on utilise comme oxyde d'alkylène b) l'oxyde de propylène, l'oxyde d'éthylène, l'oxyde de butylène, l'oxyde d'isobutylène, l'oxyde de styrène et des mélanges d'au moins deux desdits oxydes d'alkylène.

5. Procédé selon la revendication 1, **caractérisé en ce qu'**on utilise comme composant a) des alcools comportant au moins trois groupes hydroxy.

6. Procédé selon la revendication 1, **caractérisé en ce que** le composant a) contient au moins un alcool glucidique.

7. Procédé selon la revendication 1, **caractérisé en ce que** le composant a) est un mélange d'au moins un alcool solide à la température ambiante et d'un alcool liquide à la température ambiante.

8. Procédé selon la revendication 1, **caractérisé en ce qu'**on utilise comme composant a) des amines comportant au moins deux groupes amino.

9. Procédé selon la revendication 1, **caractérisé en ce qu'**on utilise comme catalyseur c) une amine.

10. Procédé selon la revendication 1, **caractérisé en ce que** le catalyseur c) une amine est choisi dans le groupe contenant des trialkylamines, en particulier la triméthylamine, la triéthylamine, la tripropylamine, la tributylamine, des diméthylalkylamines, en particulier la diméthyléthanolamine, la diméthylcyclohexylamine, la diméthyléthylamine, la diméthylbutylamine, des amines aromatiques, en particulier la diméthylaniline, la diméthylaminopyridine, la diméthylbenzylamine, la pyridine, des imidazoles (en particulier l'imidazole, le N-méthylimidazole, le 2-méthylimidazole, le 4-méthylimidazole, le 5-méthylimidazole, le 2-éthyl-4-méthylimidazole, le 2,4-diméthylimidazole, le 1-hydroxypropylimidazole, le 2,4,5-triméthylimidazole, le 2-éthylimidazole, le 2-éthyl-4-méthylimidazole, le N-phénylimidazole, le 2-phénylimidazole, le 4-phénylimidazole), la guanidine, des guanidines alkylées (en particulier la 1,1,3,3-tétraméthylguanidine), le 7-méthyl-1,5,7-triazabicyclo[4.4.0]déc-5-ène, des amidines (en particulier le 1,5-diazobicyclo[4.3.0]-non-5-ène, le 1,5-diazabicyclo[5.4.0]undéc-7-ène).

11. Procédé selon la revendication 1, **caractérisé en ce que** le catalyseur c) est la diméthyléthanolamine ou l'imidazole.

12. Procédé selon la revendication 1, **caractérisé en ce que** le catalyseur c) est l'oxyde, hydroxyde ou alcoolate d'un métal alcalin ou alcalino-terreux.
